# EUROPEAN PATENT SPECIFICATION

(11) **EP 3 420 824 B1**
(45) Date of publication and mention of the grant of the patent: **18.03.2020**
(21) Application number: 18178874.6
(22) Date of filing: 13.01.2016
(51) Int. Cl.: A23G 9/34, A23G 9/38, A23G 9/52, A23G 9/32, A23G 9/40, A23P 10/20

(54) **CONCENTRATE FOR MAKING A PREMIX FOR A FROZEN CONFECTION**
KONZENTRAT ZUR HERSTELLUNG EINER VORMISCHUNG FÜR EISKONFEKT
CONCENTRÉ DESTINÉ À FABRIQUER UN PRÉMÉLANGE POUR UNE CONFISERIE CONGELÉE

(30) Priority: 20.01.2015 EP 15151754
(43) Date of publication of application: 02.01.2019
(62) Divisional of application: 16700381.3
(73) Proprietor: Unilever PLC, London Greater London EC4Y 0DY (GB); Unilever N.V., 3013 AL Rotterdam (NL)
(72) Inventor: ANSARI, Mansoor, Ahmed, Bedford, Bedfordshire MK44 1LQ (GB); JANSSEN, Johannes, Jozef, Marie, 3133 AT Vlaardingen (NL); TETRADIS-MAIRIS, Georgios, Bedford, Bedfordshire MK44 1LQ (GB)
(74) Representative: Askew, Sarah Elizabeth

(56) References cited:
- EP-A2- 0 277 354
- EP-A2- 0 727 148
- US-A- 3 183 098
- US-A- 3 594 193
- US-A1- 2006 141 103

## Description

### Field of the invention

The present invention relates to the manufacture of frozen confections such as ice creams. More particularly the invention relates to manufacture of frozen confections from premixes made using concentrated emulsions.

### Background of the invention

The manufacture of ice cream is an energy-intensive process. Regardless of the energy needed to freeze ice cream premix, the formation of the premix itself requires energy in order to mix, disperse and/or dissolve the various ingredients. Moreover for the production of confections with excellent organoleptic properties it is desirable to emulsify any fat in the premix in the form of very small droplets.

For example, WO 00/01246 A (Unilever Plc *et al*) discloses using an homogenizer operating at high pressures in ice cream manufacturing to generate small oil droplet sizes (ca. 0.3 micron) in an ice cream premix.

Furthermore distribution of ice cream from the production factory to point of sale is also energy-intensive and to ensure maintenance of product quality requires an effective frozen supply chain. This is especially problematic for supply over large distances. One solution to reduce the cold chain requirements would be to build factories closer to the point of sale. Each factory would, however need its own manufacturing equipment and skilled labour thus requiring high investment.

The present inventors have recognized that one or more of the drawbacks associated with current mass production and distribution of ice confections can be ameliorated by employing concentrated oil-in-water emulsions for manufacture of premixes.

US 3,594,192 discloses a powdered ice cream mix and US 3,183,098 discloses a dry mix for frozen desserts.

### Summary of the invention

The present invention is directed to a concentrate for making a premix for a frozen confection as defined in claim 1.

By forming the emulsion with a high fat content of 45 wt% or more and then diluting it with the remaining ingredients, it is possible to increase the usage efficiency of homogenization equipment whilst still producing a premix suitable for manufacture of an ice confection with at least conventional quality. The efficiency of the homogenization equipment is increased because for each portion of ice confection produced, less volume of liquid is passed through the homogenizer. This means that less energy is used per confection and that more confections can be produced in the same time without investing in additional homogenizers.

In order to maximize the usage efficiency of the homogenizer it is preferred that the oil-in-water emulsion comprises fat in an amount of at least 48% by weight of the emulsion, more preferably at least 50%, more preferably still at least 53% and most preferably at least 55%.

Under certain circumstances if the emulsion becomes too concentrated it may become difficult to handle in subsequent processing. Thus it is preferred that the fat content of the emulsion is no more than 87% by weight of the emulsion, more preferably no more than 83%, even more preferably no more than 80%, even more preferably no more than 70%, even more preferably no more than 67%, more preferably still no more than 65% and most preferably no more than 63%.

There is no limitation to the type of fat used in the emulsion provided it is suitable for human consumption. However it is preferred that fat with a relatively high melting point is used as such fats allow for producing frozen confections with good aeration and/or good mouth-feel. Preferably the fat comprises or consists of one or more fats selected from coconut fat, palm fat, dairy fat or a mixture thereof, most preferably the fat comprises or consists of coconut fat, palm fat or a mixture thereof.

The emulsion is formed in step (I) by homogenization to give fat droplets having an average particle size (D_{3,2}) of less than 1 micron, more preferably the fat droplets in the emulsion have an average particle size of no greater than 0.7 micron, more preferably still no greater than 0.6 micron and most preferably from 0.1 to 0.5 micron. Fat particle sizes in can be measured using a Malvern Mastersizer (Malvern Instruments, UK) as follows: The emulsion samples are dispersed in a solution of sodium dodecyl sulphate (SDS) (Sigma UK) and urea (Sigma UK) (6.6 M urea, 0.1% SDS) and then analysed using a Malvern Mastersizer 2000. The SDS/urea solution ensures that any weakly bound or flocculated fat droplets are separated into individual fat droplets; it cannot break up fully coalesced or aggregated fat droplets. 2 g of emulsion are added to 20 ml solution of SDS/urea, mixed and left for 10 minutes. The samples are then added drop-wise into a Mastersizer 2000 for analysis. The samples are characterised by the surface weighted diameter, D_{3,2} which is a measure of the mean fat droplet size.

Any suitable homogenizer may be used to form the emulsion, including one selected from valve-type homogenizer, rotor-stator, ultrasonic homogenizer, Cavity Transfer Mixer, Controlled Deformation Dynamic Mixer or a combination thereof. Where especially high fat-content emulsions are desirable, it is preferred to use a Cavity Transfer Mixer (CTM), Controlled Deformation Dynamic Mixer (CDDM) or a combination thereof, as these types of homogenizer are especially efficient at creating high-internal phase emulsions (HIPEs). Most preferred is a CDDM. CTM and CDDM configurations and their uses are described, for example, in WO 1996/020270 A, WO 2010/089320 A, WO 2010/089322 A, WO 2010/091983 A, WO 2012/065824 A and WO 2012/089474 A.

The fat may be emulsified with any suitable emulsifier provided it is suitable for human consumption. However the present inventors have found that caseinate, especially sodium caseinate is particularly efficient at stabilizing emulsions with high fat contents without introducing high viscosity. Preferably the emulsion comprises caseinate in an amount of from 0.2 to 9% caseinate by weight of the emulsion, more preferably from 0.5 to 7%, more preferably still from 1 to 6% and most preferably from 2 to 5%. Additionally or alternatively, the emulsion comprises emulsifier such that the weight ratio of fat:emulsifier in the emulsion is in the range 5:1 to 30:1, more preferably from 10:1 to 20:1 and most preferably from 12:1 to 18:1.

On the other hand, the present inventors have found that whey protein or substances comprising whey protein (such as skimmed milk powder) may in certain circumstances cause high fat emulsions to unduly thicken or even gel. Thus it is preferred that the emulsion is substantially free from whey protein, more preferably the emulsion comprises less than 0.1% whey protein by weight of the emulsion, even more preferably less than 0.05% and most preferably from 0 to 0.01%.

The powder provided in step (II) comprises saccharides, non-saccharide sweetener, protein or a combination thereof. The saccharides preferably comprise or consist of saccharides selected from lactose, sucrose, dextrose, maltose, fructose, glucose oligosaccharides (e.g. from corn syrup, glucose syrup, maltodextrin or a mixture thereof), polysaccharides (such as starch, locust bean gum, carrageenan, guar gum, tara gum or a mixture thereof) or a mixture thereof. The total amount of saccharides in the adjunct composition is preferably in the range of from 45 to 95% by weight of the adjunct composition, more preferably 50 to 90% and most preferably from 55 to 85%. In addition to or as replacement for the saccharides, non-saccharide sweetener may be present in the adjunct composition. The non-saccharide sweetener preferably comprises intense sweeteners (for example, aspartame, saccharin, acesulfame K, alitame, thaumatin, cyclamate, glycyrrhizin, stevioside, neohesperidine, sucralose, monellin, neotame and mixtures thereof), sugar alcohols (for example, hydrogenated starch hydrosylate, eythritol, arabitol, glycerol, xylitol, sorbitol, mannitol, lactitol, maltitol, isomalt, palatinit and mixtures thereof) or a mixture thereof. The protein is preferably milk protein, more preferably casein, whey protein or a mixture thereof. Suitable sources of protein in powder form include, for example, whole milk powder, skim milk powder, yoghurt powder, whey powder, caseinate, or a mixture thereof. The total amount of protein in the powder is preferably in the range of from 1 to 20% by weight of the powder, more preferably 2 to 15% and most preferably from 3 to 12%. The powder may comprise ingredients other than saccharides and/or protein. For example the powder may comprise emulsifiers (such as mono-diglycerides and the like), flavours, acids, minerals, cocoa solids, vitamins or a combination thereof.

The granules typically have a bulk density of less than 1000 kg m⁻³, more preferably in the range 600 to 900 kg m⁻³. Additionally or alternatively the granules preferably have an average particle size (D₅₀) of at least 300 microns, more preferably in the range 400 micron to 4 mm.

Granule bulk density can be measured as follows: Granules are slowly poured through the stainless steel funnel attachment of a Flowability Tester BEP2 (Copley Scientific) into a pre-weighed receiving cup until it overflows. The top of the cup is gently levelled with a spatula and reweighed with its contents. The bulk density is calculated in terms of grams per mL by dividing the weight of the granules by the volume of the cup.

Granule particle size can be measured using sieve analysis as follows: Sieves (conforming to British Standard BS 410 and with 200 mm diameter of the frame) are stacked in the following order from top to bottom - 2.36 mm, 1.40 mm, 1.00 mm, 0.710 mm, 0.425 mm, 0.250 mm, 0.125 mm and receiving pan. The top sieve is loaded with 200 g of granules and size separation is achieved by shaking the sieve stack at amplitude of 0.8 for 5 minutes on a Glen Creston (VE 1000) sieve shaker. The granules retained on each sieve are weighed to plot the size distribution curve. D₅₀ is the size in microns that splits the distribution with half (by weight) above and half below this diameter.

The powder and emulsion are combined in a granulation step wherein the emulsion is used to bind the powder into granules. An aqueous liquid and the granules are then preferably combined by dispersing and/or dissolving the granules in the aqueous liquid.

The aqueous liquid may be any edible liquid such as milk, saccharide solution or a combination thereof. The liquid is aqueous and preferably comprises at least 50% water by weight of the liquid, more preferably at least 70%, more preferably still at least 80% and most preferably from 90 to 100%. In a preferred embodiment the aqueous liquid is water.

Using an emulsion as a binder for granules has been found to be particularly advantageous as the resulting granules are storage stable and so can be stored for long times and/or shipped to remote locations without employing a frozen supply chain. The granules can then be dispersed and/or dissolved in the aqueous liquid at a location close to point of sale resulting in a high quality premix without having to employ an homogenizer at the location close to the point of sale. This allows for relatively simple and low-investment "finishing factories" that simply need equipment for dispersing and/or dissolving the granules in the aqueous liquid and then freezing the resulting premix. Thus in one embodiment the process involves the step of combining the powder and emulsion in a granulation step at a first location wherein the emulsion is used to bind the powder into granules, transporting the granules to a location remote from the first location and then combining the granules and aqueous liquid at the remote location. By "remote location" is meant a location at least 10 km from the first location, more preferably at least 50 km and most preferably at least 100 km.

Without wishing to be bound by theory, the particularly advantageous properties of the granules are believed to result from the fact that the fat is already present in the granules as discrete droplets. Thus the present invention provides a concentrate for making a premix for a frozen confection, wherein the concentrate is in the form of granules. In one embodiment the concentrate in the form of granules comprises:
a) Saccharides and/or non-saccharide sweetener in a total amount of from 40 to 90% by weight of the concentrate, preferably from 50 to 80%, most preferably 55 to 75%;
b) protein in an amount of from 1 to 15% by weight of the concentrate, preferably from 2 to 12%, most preferably from 4 to 10%; and
c) fat in an amount of from 1 to 25% by weight of the concentrate, preferably from 3 to 22%, more preferably from 5 to 20%, most preferably from 7 to 18%; wherein the fat comprises emulsified fat droplets.

An advantage of this embodiment is that it contains most (if not all) of the solid components of an ice cream mix and so simply needs diluting with water to form a suitable mix.

In a further embodiment the concentrate in the form of granules comprises:
a) saccharides and/or non-saccharide sweetener in a total amount of from 70 to 95% by weight of the concentrate, preferably from 75 to 90%, most preferably 80 to 88%; and
b) fat in an amount of from 3 to 25% by weight of the concentrate, preferably from 4 to 22%, more preferably from 5 to 20%, most preferably from 7 to 18%; wherein the fat comprises emulsified fat droplets.

An advantage of this embodiment is that it contains the emulsified droplets carried mainly by the sacchrides such that it can be customised on dilution to make mixes suitable for a whole range of frozen confections.

In a third embodiment the concentrate in the form of granules comprises:
a) protein in an amount of from 10 to 50% by weight of the concentrate, preferably from 15 to 40%, most preferably 20 to 30%; and
b) fat in an amount of from 3 to 25% by weight of the concentrate, preferably from 4 to 22%, more preferably from 5 to 20%, most preferably from 7 to 18%; wherein the fat comprises emulsified fat droplets.

An advantage of this embodiment is that it contains the emulsified droplets in combination with a relatively large amount of protein such that it can be customised on dilution to make mixes with a variety of saccharide contents.

Preferably the fat in this third embodiment is fat other than dairy fat. More preferably the fat comprises or consists of coconut fat, palm fat or a mixture thereof.

Preferably the balance of the concentrate in the third embodiment is non-saccharide, sweetener, saccharides or a mixture thereof. Most preferably the concentrate of the third embodiment comprises saccharides, where the saccharides comprise or consist of lactose.

The concentrates of the second and third embodiments may, for example, conveniently be used together and combined in different ratios to make a variety of frozen confection mixes.

In any embodiment, the concentrate may comprise ingredients other than saccharides, fat and protein. For example the concentrate may comprise emulsifiers (such as monodiglycerides and the like), flavours, acids, minerals, cocoa solids, vitamins or a combination thereof. Preferably the concentrate comprises less than 30% moisture by weight of the concentrate, more preferably from 0 to 15%.

The granules of concentrate typically have a bulk density of less than 1000 kg m⁻³, more preferably in the range 600 to 900 kg m⁻³. Additionally or alternatively the granules preferably have an average particle size (D₅₀) of at least 300 microns, more preferably in the range 400 micron to 4 mm.

The fat droplets have an average particle size (D_{3,2}) of less than 1 micron, preferably from 0.1 to 0.7 micron.

The fat droplets are not uniformly distributed within the granules, but are located in discrete regions within the granules. For example when visualized using scanning electron microscopy (SEM) as described in the Examples herein the fat droplets are located in discrete regions separated by discrete regions free from fat droplets. Preferably the length scale (largest measurable linear distance in any direction) of the discrete regions is greater than 5 micron, more preferably from 10 to 100 micron.

The granules are obtainable by a process comprising the steps of:
I. forming an oil-in-water emulsion comprising fat in an amount of at least 45% by weight of the emulsion, preferably from 48 to 87%, wherein the emulsion is formed by homogenization;
II. providing powder comprising the saccharides, non-saccharide sweetener and/or protein;
III. binding the powder with the emulsion to form agglomerates; and
IV. drying the agglomerates.

All other aspects of the present invention will more readily become apparent upon considering the detailed description and examples which follow.

### Detailed description

The present invention will now be described, by way of example only, with reference to the figures, wherein:
Figure 1 shows a flow diagram for frozen confection.
Figure 2 is a flow a flow diagram for frozen confection.
Figure 3 is a flow a flow diagram for frozen confection manufacture according to an embodiment of the invention.
Figure 4 shows a scanning electron micrograph of granulated ice cream premix concentrate according to an embodiment of the invention at a magnification of (a) x 1000 and (b) x 4000.
Figure 5 shows a micro-CT image of a granule of ice cream premix concentrate in (a) perspective view and (b) cross-section.

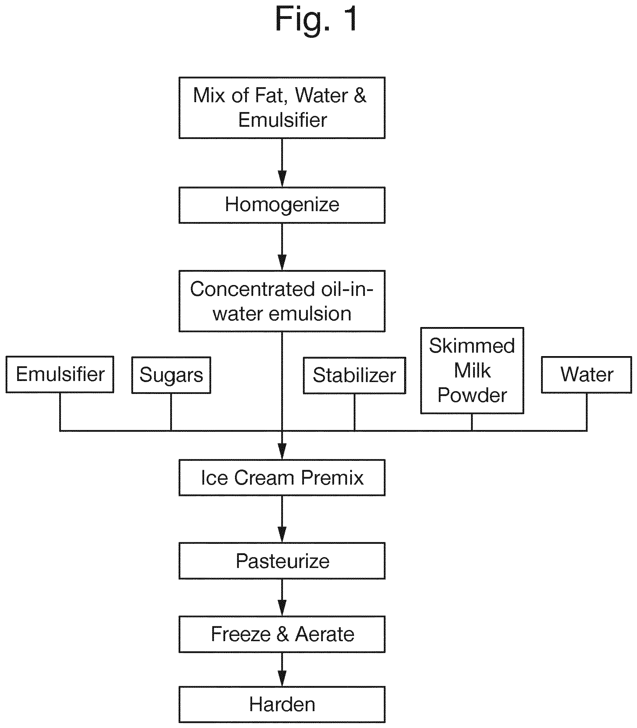

Referring to Figure 1, an ice cream manufacturing process begins with forming a mixture of fat, water and emulsifier. For example desired amounts of coconut fat, water and sodium caseinate are weighed into a mix tank to form a mix of 55 wt% coconut fat, 3.9 wt% sodium caseinate and 41.1 wt% water. The mix may be gently heated in the tank to melt the fat. Preferably the fat is melted and added as a liquid to the mix tank.

The resulting mixture is then fed through an homogenizer in the same manner as for a conventional premix to produce a concentrated oil-in-water emulsion wherein the fat droplets have an average particle size below 1 micron. Owing to the high fat content of the emulsion, the present inventors have found that small particle sizes may be achieved even if lower homogenization pressures are used than in conventional premix manufacture.

The concentrated emulsion may also be optionally pasteurized or sterilized at this point which, for example, gives more flexibility in the manufacturing process as the emulsion can be stored until needed or even transported to a remote location for further processing.

In the next step of the process shown in Figure 1 the concentrated emulsion is combined with water and powdered ice cream ingredients (for example sugars, stabilizer, skimmed milk powder and emulsifier) in a mix tank. The powders could be pre-blended before adding to the mix tank or added individually. Similarly some powders could be predissolved/dispersed in the water prior to adding to the mix tank.

The full premix can then optionally be pasteurized. An additional or alternative step is ageing the premix at temperatures between 0 and 10 °C in order to promote fat crystallization which helps in aerating the mix in subsequent steps.

The next step shown in Figure 1 is freezing & aerating the premix which can conveniently be achieved simultaneously in a scraped surface heat-exchanger, to produce the ice cream. Finally the frozen and aerated ice cream is optionally hardened, for example by blast-freezing at a temperature below -20 °C, and is then ready for storage and/or distribution.

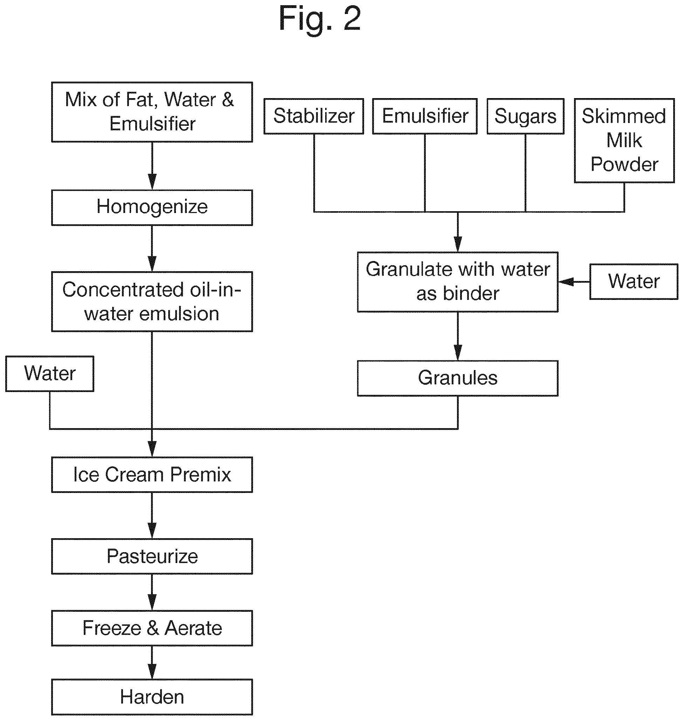

Referring now to Figure 2, another ice cream manufacturing process is shown. The difference between this embodiment and the one shown in Figure 1 is that the powder ingredients are first granulated before combining with the emulsion and water to form the premix.

Granulation can be achieved, for example, by agglomerating the powders with an aqueous liquid binder which is shown in Figure 2 as water but which could equally be an aqueous solution of one of the powder components (for example aqueous sugar solution). Granulation equipment is widely available and preferred types include, for example, ploughshare mixers, Nauta mixers, screw extruders and the like.

The advantages of the process shown in Figure 2 over that in Figure 1 include that the powder can be shipped to a remote location in the form of granules which simply need dissolving/dispersing at the remote location without any need for handling and blending multiple powders. Furthermore shipping the powder ingredients as performed granules avoids any issues of powder separation which may be encountered if powders were simply blended prior to shipping. Furthermore the present inventors have found that granules are much easier to disperse and/or dissolve than conventional spray-dried powders and so reduce the requirements for powerful mixing equipment at the location where the powder is combined with the emulsion.

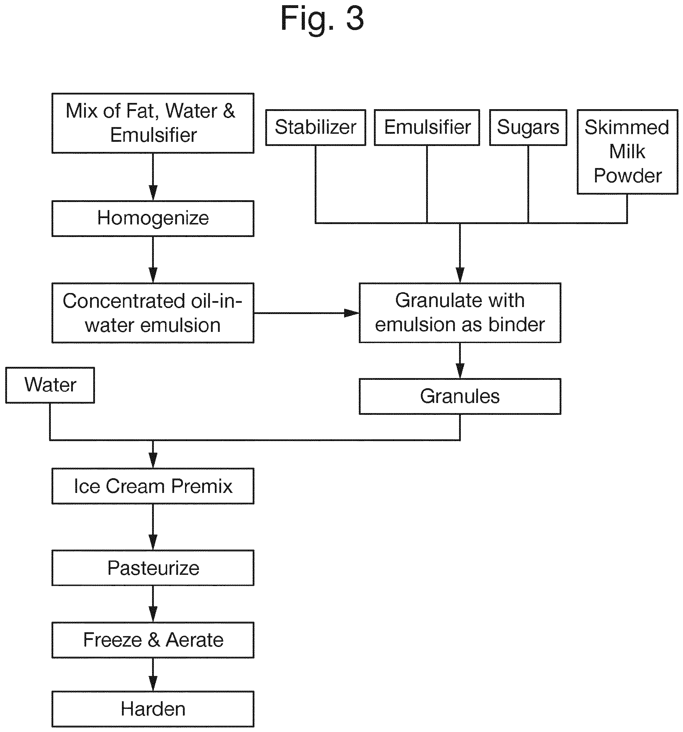

Referring now to Figure 3, an especially preferred embodiment of an ice cream manufacturing process according to the invention is shown. The difference between this embodiment and the one shown in Figure 2 is that the powder ingredients are granulated using the emulsion as binder.

The advantages of the process shown in Figure 3 over that in Figure 2 include that the granules are much more storage stable than a liquid emulsion and so can be stored for longer and/or transported for longer distances. Furthermore, as shown in Figure 3, formation of the premix requires simply combining the granules with water to disperse/dissolve the granules. Surprisingly the present inventors have found that granules wherein the emulsion is used as binder can form ice cream premixes of good quality without the use of complex mixing equipment. Without being bound by theory the inventors believe this may be due to the presence of the fat as discrete droplets within the powder or at least the localization of such droplets in discrete regions within the granules.

Although the invention has been described with reference to specific embodiments, various modifications of the described modes for carrying out the invention which are apparent to those skilled in the relevant fields are intended to be within the scope of the following claims.

All amounts are by weight unless otherwise specified. It should be noted that in specifying any range of values, any particular upper value can be associated with any particular lower value.

### Examples

### Example 1

This example demonstrates production of ice cream using a process according to the embodiment shown in Figure 1.

An oil-in-water emulsion containing 55 wt% coconut fat (Cargill), 3.85 wt% sodium caseinate (Frieslandcampina) and 41.15 wt% water was prepared as follows: Hot water at 82 °C was added to a mix vessel, followed by the sodium caseinate. The contents of the vessel were vigorously mixed for 5-7 minutes to ensure complete dispersion/dissolution of sodium caseinate. The pre-melted fat/oil was then metered into the vessel and the mixture was agitated at high speeds for further 10 minutes. The mixing operation typically took around 20 minutes. The resulting coarse emulsion was then pumped through a two stage homogenizer (Tetra Alex S05 A supplied by Tetra Pak) at a pressures of 175 bar and 30 bar in the 1st and 2nd stages respectively. The homogenized emulsion was then stored in the storage vessel before metering into the main mixing vessel.

The ingredients shown in Table 1 were then blended into a single powder:

**TABLE 1**

| **Ingredient** | **Amount (% by weight of total powder blend)** |
|---|---|
| Mono-diglyceride emulsifiers | 1.2 |
| Stabilizers (Locust Bean Gum, Guar Gum + Carrageenan) | 0.65 |
| Skimmed Milk Powder | 23 |
| Whey Protein Concentrate | 6.1 |
| Maltodextrin and Glucose Syrup | 31 |
| Sucrose | Balance |

This powder was then dispersed/dissolved in the emulsion and extra water in the main mixing vessel in the following proportions (by weight): 55 parts water, 32 parts powder blend and 13% parts emulsion. The mean droplet size (D_{3,2}) of the emulsion was 0.3 µm which remained unchanged after mixing with rest of the ingredients.

The resulting premix was then pasteurized, cooled, frozen and aerated in a scraped surface heat exchanger (ice cream freezer) before hardening and frozen storage.

The sensorial properties (as assessed by a trained panel of 18 people) of the ice cream made via this procedure were similar to a control ice cream with identical composition but prepared in the conventional manner whereby the whole premix is homogenized.

The meltdown properties of this and the control ice cream were also found to be very similar.

### Example 2

This example demonstrates formation of a concentrate in the form of granules wherein an emulsion was used as binder.

The emulsion for granulation was prepared by the method described above in Example 1 except that the composition of the emulsion was 60 wt% coconut fat, 4.2 wt% sodium caseinate and 35.8 wt% water. This emulsion was used as a binder to produce granules. The composition of the powder blend that was granulated is the same as shown in Table 1 above.

The granulation was performed using an 80 L ploughshare mixer without chopper/refiner. 50 kg of powder the blend was first mixed for 3 minutes in the mixer to obtain a uniform composition. The binder (emulsion) was then added at the rate of 0.82 kg/min. The binder addition was stopped at regular intervals while continuing mixing to promote homogenous distribution of emulsion/binder in the powder. In this particular example the granulation process was stopped after the addition of 11 kg of emulsion. The total binder loading in the granules was about 18% by total weight of the granules. The wet granules were then dried in a fluid bed dryer at 65 °C such that the final moisture content in the granulated concentrate was less than 3 wt%.

The bulk density of these granules was determined to be 752 kg/m³.

The particle size distribution as determined by sieve analysis is given in Table 2.

**TABLE 2**

| **Sieve Size (mm)** | **Amount Retained (wt%)** |
|---|---|
| 2.36 | 30.76 |
| 1.40 | 24.35 |
| 1.00 | 15.97 |
| 0.710 | 16.88 |
| 0.425 | 9.77 |
| 0.25 | 1.64 |
| 0.125 | 0.63 |
| Receiving Pan | 0.00 |

From this data it can be seen that the average particle size (D₅₀) was about 1.2 mm.

To prepare ice cream from these granules, firstly hot water at 82 °C was introduced in an ice cream mix preparation vessel. The granules were then added at gentle mixing conditions to obtain 40 wt% total solid in water. The mixing was continued for 15 minutes. Vanilla flavor was added 5 minutes before completing the mixing process. The mix was then pasteurized, cooled, frozen and aerated and then hardened in the conventional manner. The mean droplet size, D_{3,2}, of the fat in the premix prior to freezing was <0.5 µm. The melt down and sensorial properties of the ice cream was of acceptable quality in comparison to ice cream made via the conventional route.

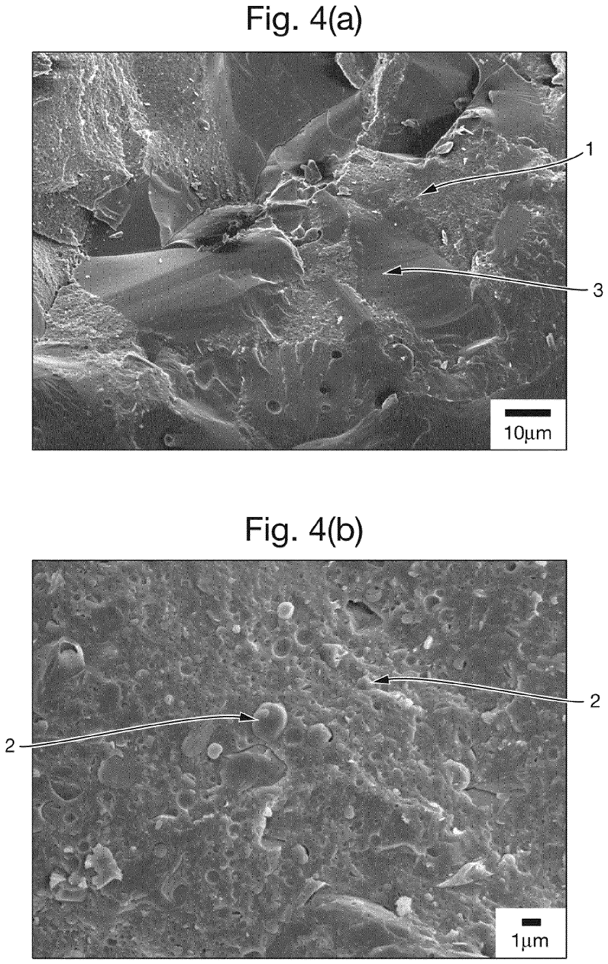

Figure 4 shows scanning electron micrographs of the granulated concentrate.

The electron micrographs were obtained as follows:
Samples of the concentrates were rapidly mixed with a small volume of diluted mountant (1 part OCT, 3 parts deionised water) to give a thick suspension. This was mounted in to a 5 mm drilled depression in a 10 mm diameter Aluminium stub and immediately plunged in to liquid nitrogen to minimise any dilution at the periphery of the powder particles. Rapid freezing of the diluted mountant created very small ice crystals which were used to assist in differentiating mountant from the granules.

Frozen samples were transferred to a Gatan Alto 2500 low temperature preparation chamber and heated to -90 °C, fractured, etched for 30 seconds and cooled to -110 °C. After sputter coating to give a 2 nm Pt layer, samples were transferred to a Jeol 7600 field emission scanning electron microscope fitted with a Gatan cold stage at -130 °C for examination. Imaging parameters include 5 kV accelerating voltage and approximately 60 pA probe current. Secondary electron imaging used low magnification and SEI high resolution modes at working distances of approximately 20 mm or 10 mm.

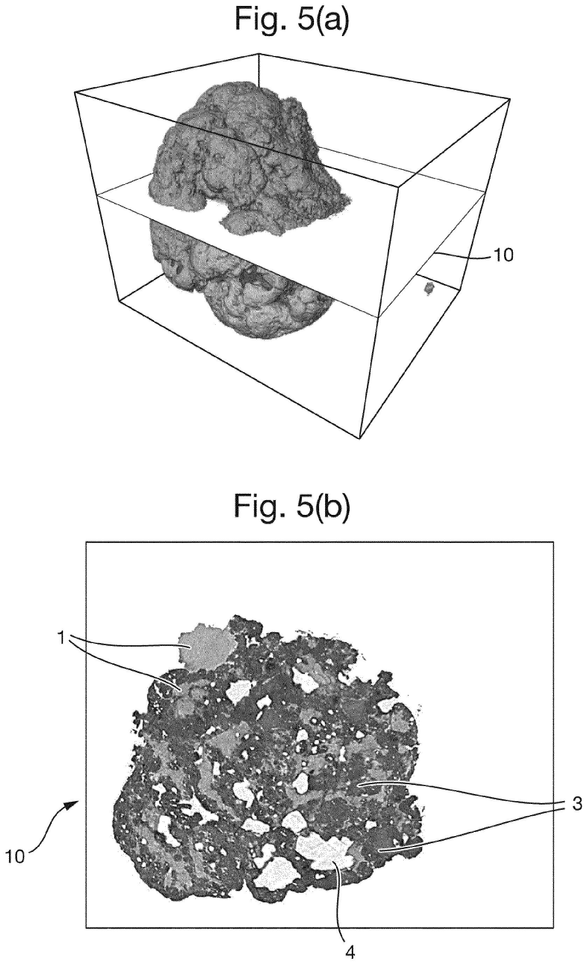

As shown in Figure 4, owing the large particle size, even at a low magnification of x1000 (Figure 4 (a)) the borders of the granule particles are not visible. Instead within the particle can be seen discrete regions (1) containing fat droplets (2) separated by discrete regions (3) of non-fat components. The length scale of the regions (1) can be seen in Figure 5(a) to be a few tens of microns.

Figure 5 shows the results of X-ray microtomography of a representative granule from the concentrate. The micro-computed tomography (or micro CT) was conducted as follows:
Samples in plastic cylindrical sample holders with an inner diameter of 3.3 mm were imaged using a Skyscan 1172 desktop micro-CT system. Power settings of 59 kV and 167µA were used. Images were acquired using a step size of 0.20° over 360 degrees and frame averaging of 3. Scans with pixel sizes of 1.0 µm were made. For 3D visualisation and quantitative analysis the AvizoFire 8.1.1 software of Visualization Sciences Group, Inc was used. The different phases were identified using thresholding.

Figure 5(a) shows the whole granule while Figure 5b shows the granule in section through a plane (10). The plane (10) has a width of 2.7 mm and a height of 2.2 mm as shown in Figure 5 (b). It is clear from Figure 5(b) that the granule comprises discrete fat-containing regions (1), separated by discrete regions (3) of non-fat components. Also visible in Figure 5(b) are gas cells (4) which form pores in the granule.

### Example 3

This example demonstrates formation of a concentrated oil-in water emulsion suitable for use in the invention wherein the emulsion is formed with a rotor-stator homogenizer.

In this example whey protein concentrate (Textrion Progel™ 800 ex DMV) was used as surface active protein to emulsify the fat. The composition of the high fat emulsion is shown in Table 3.

**TABLE 3**

| **Ingredient** | **% by weight of emulsion** |
|---|---|
| Sunflower oil | 52 |
| Whey protein concentrate | 9 |
| Sucrose | 19 |
| Water | 20 |

The emulsion was made using an IKA Labor-Pilot™ 2000/4 colloid mill (IKA-Werke GmbH & co. KG, Staufen, Germany). The mill is rpm controlled and provides integrated measurement of the exit temperature, pressure drop and powder input. The emulsification was performed with a smooth milling head at a minimal gap of 0.1 mm and at 10,000 rpm. The mill head is jacketed for active cooling with cold water.

A pre-emulsion was prepared in 2 kg batches in a 5 litre vessel equipped with six-blade impeller with blade angle of 45°. The protein solution was prepared first by adding powder gradually to lukewarm water. The protein was then immediately followed by gradual oil addition. The sucrose was added after the oil. The pre-emulsion was fed to the mill using a mono pump. The resultant emulsion from the discharge end was collected in a suitable container for characterization. The droplet size (D_{3,2}) of this emulsion was 0.39 µm.

A second emulsion with the composition shown in Table 4 was prepared in a similar manner but with the mill operating at 8500 rpm.

**TABLE 4**

| **Ingredient** | **% by weight of emulsion** |
|---|---|
| Sunflower oil | 63 |
| Whey protein concentrate | 12 |
| Sucrose | 0 |
| Water | 25 |

The resultant emulsion droplet size (D_{3,2}) was 0.68µm.

### Example 4

This example demonstrates formation of a concentrated oil-in water emulsion suitable for use in the invention wherein the emulsion is homogenized with a CDDM.

An aqueous phase, an oil phase and an emulsion were prepared and the said oil phase and emulsion were then combined to form a HIPE as set out below. The composition of the HIPE is shown in Table 5.

**TABLE 5**

| **Ingredient** | **% by weight of emulsion** |
|---|---|
| Coconut oil | 76 |
| Mono-di glyceride | 3 |
| Sodium Caseinate | 3 |
| Water | 18 |

The aqueous and oil phases and emulsion were prepared according to the following method:
1.1 A 2 litre steel container was placed on a hot plate into which 0.425 kg of boiling water was introduced. 75 grams sodium caseinate was added slowly to the boiling water while stirring with an IKA ULTRA-TURRAX T18 with a S 18 N - 19 G Dispensing element. Stirring was continued until visually the sodium caseinate was judged to be in solution. The temperature of the resultant aqueous phase was held at -80 °C.
1.2 2880 grams of coconut oil was slowly melted in a 5 litre vessel. The coconut oil temperature was raised to ∼ 90 °C. 120 g of Mono-di glyceride (HP60) was added to the molten oil. The mixture was stirred by hand until the HP60 dissolved to form a transparent solution. The temperature of the resultant oil phase was held at -80 °C.
1.3 1.17 kg of the oil phase prepared according to 1.2 was transfered into the steel container over a period of 10 minutes while stirring with an IKA EUROSTAR overhead stirrer fitted with a Jiffy Mixer [HS-1] O.D. 67mm. Stirring speed was maintained at 1000 rpm to produce a concentrated oil-in-water emulsion. Stirring was continued for a further 10 minutes throughout which the temperature of the resultant oil-in-water emulsion was held at -80 °C.

The oil phase and emulsion prepared according to 1.2 and 1.3, respectively, were combined and mixed in the appropriate proportion to form the HIPE of Table 5 via a continuous mixing assembly comprising the following:
2.1 Two hoppers, the first hopper (1 litre capacity) containing the oil phase from 1.2 and the second hopper (5 litre capacity) containing the emulsion from 1.3.
2.2 Two progressive cavity pumps [Supplier = Mono Pumps, Spec. No. = LF052], the first being gravity fed from the first (oil phase) hopper and the second being gravity fed from the second (emulsion pre-mix) hopper.
2.3 A gear pump [Supplier = Pump Solutions Group, Spec. No = MARG CINO CX22/13], which is attached to the outlets of each of the progressive cavity pumps by pipework configured as a "T" piece, which enables the output streams from each of the two progressive cavity pumps to be combined into a single feed stream to the inlet of said gear pump.
2.4 A CDDM [Supplier = Maelstrom Advanced Process Technologies Limited, Spec. No. = MaPP Benchtop System mk 1.0] attached at the inlet to the outlet of said gear pump, and from the outlet of which a HIPE is discharged.

The resulting HIPE had a droplet size D_{3,2} of 0.57µm.

### Example 5

This example demonstrates two granule compositions which can be used in various propositions to make a variety of frozen confection mixes.

The granules were made in a similar manner as described in Example 2 but with the powder ingredients being either saccharides (Sample A) or dairy powders (Sample B). The final composition of the granules is shown in Tables 6 and 7.

**TABLE 6**

| **Ingredient** | **% by weight of Sample A** |
|---|---|
| Maltodextrin 17-20DE | 12.5 |
| Glucose Syrup Solids 40DE | 23.3 |
| Sucrose | Balance |
| Coconut Oil (Emulsified) | 15.4 |

**TABLE 7**

| **Ingredient** | **% by weight of Sample B** |
|---|---|
| Skimmed Milk Powder | Balance |
| Whey Powder | 17.0 |
| Coconut Oil (Emulsified) | 15.4 |

The two samples of granules can, for example, be combined in a weight ratio of 2.4 to 1 (Sample A to Sample B) and dissolved together in water to a total solids level of around 40%. The resulting mix provides good quality ice cream on freezing and aeration.

## Claims

1. A concentrate for making a premix for a frozen confection, wherein the concentrate is in the form of granules, wherein the granules are obtainable by a process comprising the steps of:
I. forming an oil-in-water emulsion comprising fat in an amount of at least 45% by weight of the emulsion, preferably from 48 to 87%, wherein the emulsion is formed by homogenization to give emulsified fat droplets;
II. providing powder comprising the saccharides, non-saccharide sweetener and/or protein;
III. binding the powder with the emulsion to form agglomerates; and
IV. drying the agglomerates;
and wherein the concentrate in the form of granules comprises:
a) saccharides and/or non-saccharide sweeteners in a total amount of from 40 to 90% by weight of the concentrate;
b) protein in an amount of from 1 to 15% by weight of the concentrate; and
c) fat in an amount of from 1 to 25% by weight of the concentrate;
or
a) saccharides and/or non-saccharide sweetener in a total amount of from 70 to 95% by weight of the concentrate; and
b) fat in an amount of from 3 to 25% by weight of the concentrate;
or
a) protein in an amount of from 10 to 50% by weight of the concentrate; and
b) fat in an amount of from 3 to 25% by weight of the concentrate;
wherein the fat comprises emulsified fat droplets having an average particle size (D_{3,2}) of less than 1 micron as determined by the following method: 2 g of emulsion are added to 20 ml solution of 6.6 M urea and 0.1% sodium dodecyl sulphate, mixed and left for 10 minutes and then added drop-wise into a Malvern Mastersizer™ 2000 for analysis; and
wherein the fat droplets are not uniformly distributed within the granules, but are located in discrete regions within the granules.

2. The concentrate as claimed in claim 1 wherein the fat droplets have an average particle size (D_{3,2}) of from 0.1 to 0.7 micron.

3. The concentrate as claimed in any one of the preceding claims wherein the granules have a bulk density of less than 1000 kg m⁻³.

4. The concentrate as claimed in claim 3 wherein the granules have a bulk density in the range 600 to 900 kg m⁻³.

5. The concentrate as claimed in any one of the preceding claims wherein the granules have an average particle size (D₅₀) of at least 300 microns.

6. The concentrate as claimed in claim 5 wherein the granules have an average particle size (D₅₀) in the range 400 micron to 4 mm.

## Patentansprüche

1. Konzentrat zur Herstellung einer Vormischung für ein gefrorenes Konfekt, wobei das Konzentrat in Granulatform vorliegt, wobei das Granulat durch ein Verfahren erhältlich ist, umfassend die Schritte:
I. Bilden einer Öl-in-Wasser-Emulsion, umfassend Fett in einer Menge von mindestens 45 Gewichts-% der Emulsion, vorzugsweise von 48 bis 87%, wobei die Emulsion durch Homogenisation gebildet wird, um emulgierte Fetttröpfchen zu liefern;
II. Bereitstellen eines Pulvers, umfassend die Saccharide, Nicht-Saccharid-Süßmittel und/oder Protein;
III. Binden des Pulvers mit der Emulsion, um Agglomerate zu bilden; und
IV. Trocknen der Agglomerate;
und wobei das Konzentrat in Granulatform umfasst:
a) Saccharide und/oder Nicht-Saccharid-Süßmittel in einer Gesamtmenge von 40 bis 90 Gewichts-% des Konzentrats;
b) Protein in einer Menge von 1 bis 15 Gewichts-% des Konzentrats; und
c) Fett in einer Menge von 1 bis 25 Gewichts-% des Konzentrats;
oder
a) Saccharide und/oder Nicht-Saccharid-Süßmittel in einer Gesamtmenge von 70 bis 95 Gewichts-% des Konzentrats; und
b) Fett in einer Menge von 3 bis 25 Gewichts-% des Konzentrats;
oder
a) Protein in einer Menge von 10 bis 50 Gewichts-% des Konzentrats; und
b) Fett in einer Menge von 3 bis 25 Gewichts-% des Konzentrats;
wobei das Fett emulgierte Fetttröpfchen mit einer durchschnittlichen Partikelgröße (D_{3,2}) von weniger als 1 Micron, bestimmt durch die folgende Methode, umfasst: 2 g der Emulsion werden zu 20 ml Lösung von 6,6 M Harnstoff und 0,1% Natriumdodecylsulfat gegeben, gemischt und 10 Minuten lang belassen und dann zur Analyse tropfenweise in einen Malvern-Mastersizer™ 2000 gegeben; und
wobei die Fetttröpfchen innerhalb des Granulats nicht gleichmäßig verteilt sind, sondern sich in diskreten Bereichen innerhalb des Granulats befinden.

2. Konzentrat, wie im Anspruch 1 beansprucht, wobei die Fetttröpfchen eine durchschnittliche Partikelgröße (D_{3,2}) von 0,1 bis 0,7 Micron aufweisen.

3. Konzentrat, wie in irgendeinem der vorhergehenden Ansprüche beansprucht, wobei das Granulat eine Schüttdichte von weniger als 1000 kg m⁻³ aufweist.

4. Konzentrat, wie im Anspruch 3 beansprucht, wobei das Granulat eine Schüttdichte in dem Bereich von 600 bis 900 kg m⁻³ aufweist.

5. Konzentrat, wie in irgendeinem der vorhergehenden Ansprüche beansprucht, wobei das Granulat eine durchschnittliche Partikelgröße (D₅₀) von mindestens 300 Micron aufweist.

6. Konzentrat, wie im Anspruch 5 beansprucht, wobei das Granulat eine durchschnittliche Partikelgröße (D₅₀) in dem Bereich von 400 Micron bis 4 mm aufweist.

## Revendications

1. Concentré pour la fabrication d'un prémélange destiné à une confiserie congelée, dans lequel le concentré est dans la forme de granulés, dans lequel les granulés peuvent être obtenus par un procédé comprenant les étapes de :
I. formation d'une émulsion huile-dans-eau comprenant de la graisse dans une quantité d'au moins 45 % en masse de l'émulsion, de préférence de 48 à 87 %, dans lequel l'émulsion est formée par homogénéisation pour fournir des gouttelettes de graisse émulsionnées ;
II. fourniture de poudre comprenant les saccharides, édulcorant de non-saccharide et/ou protéine ;
III. liaison de la poudre avec l'émulsion pour former des agglomérats ; et
IV. séchage des agglomérats ;
et dans lequel le concentré est dans la forme de granulés qui comprend :
a) des saccharides et/ou édulcorants de non-saccharides dans une quantité totale de 40 à 90 % en masse du concentré ;
b) une protéine dans une quantité de 1 à 15 % en masse du concentré ; et
c) une graisse dans une quantité de 1 à 25 % en masse du concentré ;
ou
a) des saccharides et/ou édulcorant de non-saccharides dans une quantité totale de 70 à 95 % en masse du concentré ; et
b) une graisse dans une quantité de 3 à 25 % en masse du concentré ;
ou
a) une protéine dans une quantité de 10 à 50 % en masse du concentré ; et
b) une graisse dans une quantité de 3 à 25 % en masse du concentré ;
dans lequel la graisse comprend des gouttelettes de graisse émulsionnées présentant une taille moyenne de particule (D_{3,2}) inférieure à 1 micron comme déterminée par la méthode suivante : 2 g d'émulsion sont ajoutés à 20 ml de solution d'urée 6,6 M et dodécylsulfate de sodium à 0,1 %, mélangés et laissés pendant 10 minutes et puis ajoutés goutte à goutte dans un Malvern Mastersizer™ 2000 pour analyse ; et
dans lequel les gouttelettes de graisse ne sont pas uniformément distribuées dans les granulés, mais sont disposées dans des régions discrètes dans les granulés.

2. Concentré selon la revendication 1, dans lequel les gouttelettes de graisse présentent une taille moyenne de particule (D_{3,2}) de 0,1 à 0,7 micron.

3. Concentré selon l'une quelconque des revendications précédentes, dans lequel les granulés présentent une masse volumique apparente inférieure à 1 000 kg m⁻³.

4. Concentré selon la revendication 3, dans lequel les granulés présentent une masse volumique apparente dans l'intervalle de 600 à 900 kg m⁻³.

5. Concentré selon l'une quelconque des revendications précédentes, dans lequel les granulés présentent une taille moyenne de particule (D₅₀) d'au moins 300 microns.

6. Concentré selon la revendication 5, dans lequel les granulés présentent une taille moyenne de particule (D₅₀) dans l'intervalle de 400 microns à 4 mm.
